(19) Europäisches Patentamt
European Patent Office
Office européen des brevets

(11) **EP 4 178 909 B1**

(12) **EUROPEAN PATENT SPECIFICATION**

(45) Date of publication and mention
of the grant of the patent:
**02.07.2025 Bulletin 2025/27**

(21) Application number: **21751696.2**

(22) Date of filing: **12.07.2021**

(51) International Patent Classification (IPC):
*C01B 3/40* *(2006.01)*    *B01J 21/04* *(2006.01)*
*B01J 23/89* *(2006.01)*    *B01J 37/02* *(2006.01)*
*B01J 37/18* *(2006.01)*

(52) Cooperative Patent Classification (CPC):
**C01B 3/40; B01J 21/04; B01J 23/8986;**
**B01J 37/0201; B01J 37/18;** C01B 2203/0233;
C01B 2203/0238; C01B 2203/1058;
C01B 2203/1064; C01B 2203/107;
C01B 2203/1082; Y02P 20/141; Y02P 20/52

(86) International application number:
**PCT/US2021/041226**

(87) International publication number:
**WO 2022/015625 (20.01.2022 Gazette 2022/03)**

(54) **DRY REFORMING OF HYDROCARBONS**

TROCKENREFORMIERUNG VON KOHLENWASSERSTOFFEN

REFORMAGE À SEC D'HYDROCARBURES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.07.2020 US 202016927642**

(43) Date of publication of application:
**17.05.2023 Bulletin 2023/20**

(73) Proprietor: **Saudi Arabian Oil Company**
**Dhahran 31311 (SA)**

(72) Inventors:
• **HARALE, Aadesh**
**Dhahran, 31311 (SA)**
• **LEE, Kunho**
**Dhahran, 31311 (SA)**
• **SOLAMI, Bandar**
**Dhahran, 31311 (SA)**
• **ALQARNI, Abdulbari Yahya**
**Dhahran, 31311 (SA)**

(74) Representative: **Fish & Richardson P.C.**
**Highlight Business Towers**
**Mies-van-der-Rohe-Straße 8**
**80807 München (DE)**

(56) References cited:
EP-A2- 2 104 657    US-A1- 2015 013 225
US-A1- 2017 001 176

**Description**

TECHNICAL FIELD

This disclosure relates to reforming of hydrocarbons, and in particular, dry reforming of hydrocarbons.

BACKGROUND

Synthesis gas, also referred to as syngas, is a fuel gas mixture that includes hydrogen, carbon monoxide, and sometimes carbon dioxide. Syngas is combustible and can be used as a fuel of internal combustion engines. In some cases, syngas can be used as an intermediate for producing synthetic petroleum for use as a fuel or lubricant. Syngas can also be used to produce methanol or as a hydrogen source for various processes. Hydrocarbon reforming is one example of a process for producing syngas.

EP 2104657 describes a method for the thermo-neutral reforming of liquid hydrocarbon fuels which employs a Ni, $Ce_2O_3$, $La_2O_3$, $PtZrO_2$, Rh and Re catalyst having dual functionalities to achieve both combustion and steam reforming.

US 2017/001176 describes catalysts capable of catalyzing the dry reforming of methane. The catalysts have a core-shell structure with the shell surrounding the core. The shell has a redox-metal oxide phase that includes a metal dopant incorporated into the lattice framework of the redox-metal oxide phase. An active metal is deposited on the surface of the shell.

SUMMARY

This disclosure describes technologies relating to hydrocarbon reforming.

The invention relates to a dry reforming process as from claim 1.

This, and other aspects, can include one or more of the following features.

In some implementations, the feed stream is preheated to a temperature in a range of from about 750 degrees Celsius (°C) to about 950°C.

In some implementations, an operating pressure within the reactor during the dry reforming reaction is in a range of from about 7 bar to about 28 bar.

In some implementations, the feed stream has a carbon dioxide to hydrocarbon ratio in a range of from about 1:1 to about 4:1.

In some implementations, the carbon dioxide to hydrocarbon ratio of the feed stream is in a range of from about 1:1 to about 2:1.

In some implementations, the feed stream includes water.

In some implementations, the feed stream has a water to carbon ratio in a range of from about 1:10 to about 3:1.

In some implementations, the water to carbon ratio of the feed stream is in a range of from about 1:10 to about 1:1.

The catalyst includes zirconium oxide ($ZrO_2$), rhodium (Rh), rhenium (Re), and an aluminate support.

In some implementations, the catalyst includes about 0.5 weight percent (wt. %) to about 15 wt. % of Ni, about 0.5 wt. % to about 10 wt. % of $Ce_2O_3$, about 0.5 wt. % to about 5 wt. % of $La_2O_3$, about 0.1 wt. % to about 2 wt. % of Pt, up to about 1 wt. % of $ZrO_2$, up to about 2 wt. % of Rh, and up to about 2 wt. % of Re.

In some implementations, potassium (K) is incorporated into the aluminate support.

In some implementations, the catalyst includes about 0.5 wt. % to about 5.0 wt. % of K.

The details of one or more implementations of the subject matter of this disclosure are set forth in the accompanying drawings and the description. Other features, aspects, and advantages of the subject matter will become apparent from the description, the drawings, and the claims.

DESCRIPTION OF DRAWINGS

FIG. 1A is a schematic diagram of an example system for dry reforming of hydrocarbons.

FIG. 1B is a schematic diagram of an example system for dry reforming of hydrocarbons.

FIG. 2 is a flow chart of an example method for dry reforming of hydrocarbons.

FIGs. 3A-1, 3A-2, 3A-3, and 3A-4 are plots that illustrate thermodynamic equilibrium product compositions of a dry reforming process.

FIGs. 3B-1, 3B-2, and 3B-3 are plots that illustrate the effect of operating pressure on a dry reforming process.

FIGs. 3C-1, 3C-2, and 3C-3 are plots that illustrate the effect of operating pressure on a dry reforming process.

FIGs. 3D-1, 3D-2, and 3D-3 are plots that illustrate the effect of operating pressure on a dry reforming process.

FIGs. 3E-1, 3E-2, and 3E-3 are plots that illustrate the effect of gas hourly space velocity on a dry reforming process.
FIGs. 3F-1, 3F-2, and 3F-3 are plots that illustrate the effect of operating temperature on a dry reforming process.
FIGs. 3G-1, 3G-2, and 3G-3 are plots that illustrate the effect of operating temperature on a dry reforming process.

## DETAILED DESCRIPTION

This disclosure describes reforming of hydrocarbons. The conversion of hydrocarbon fuels to hydrogen can be carried out by several processes, including hydrocarbon steam reforming, partial oxidation reforming, auto thermal reforming, and dry reforming. Hydrocarbon dry reforming involves the reaction of carbon dioxide ($CO_2$) with the fuel (for example, methane, $CH_4$) in the presence of a catalyst and the absence of oxygen to produce hydrogen ($H_2$) and carbon monoxide (CO) as given in Equation (1). A mixture of hydrogen and carbon monoxide can be referred to as synthesis gas (syngas). In some cases, syngas also includes carbon dioxide.

$$CH_4 + CO_2 \rightarrow 2CO + 2H_2 \; (\Delta H_{298K} = +247 \text{ kJ·mol}^{-1}) \qquad (1)$$

The subject matter described in this disclosure can be implemented in particular implementations, so as to realize one or more of the following advantages. Dry reforming produces hydrogen and carbon monoxide in a 1:1 molar ratio, which is suitable for a diverse array of hydroformylation applications. About half of the carbon atoms in the resulting syngas from the dry reforming process originates from the carbon dioxide instead of the methane. This reduces the dependency of the dry reforming process on methane feedstock in comparison to other reforming processes (for example, steam reforming in which all of the carbon atoms originate from the methane). Further, carbon dioxide, which is a known greenhouse gas, is feedstock for the dry reforming process to form a useful product instead of, for example, being expelled into the atmosphere. The catalyst described herein exhibits resistance to coke formation and sintering, even under elevated temperature and pressure conditions. The processes and catalysts described can allow for economical ways to reduce greenhouse gas emissions. The processes described can integrate renewable hydrogen in existing industrial processes and can mitigate carbon footprint chemicals and fuels.

Although dry reforming has been known, currently known catalysts, for example, nickel-alumina based catalysts, can suffer from deactivation due to excessive coke deposition and agglomeration (that is, sintering) of metal particles at the elevated temperatures required for dry reforming, which can cause reduction of usable surface area of the catalyst. Sintering involves agglomeration of small metal particles to form larger metal particles and results in the reduction of active sites of the catalyst. Coking involves a carbon-containing compound cracking on the surface of the catalyst, which gives selectivity to undesirable side reaction products and also results in the reduction of active sites of the catalyst. Catalysts based on Group VIII noble metals may be less sensitive to coking in comparison to nickel based catalysts, but they can also be more expensive to form and can also be more prone to sintering. Certain precious metals, such as platinum (Pt), palladium (Pd), iridium (Ir), rhodium (Rh), and ruthenium (Ru) can exhibit favorable dry reforming activity while resisting deactivation via coking and sintering.

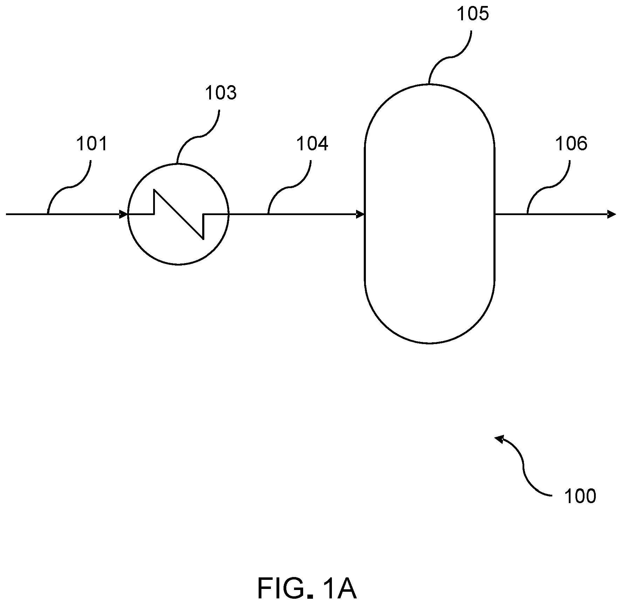

Referring to FIG. 1A, a system 100 includes a feed stream 101, a preheater 103, and a reactor 105. The feed stream 101 includes a hydrocarbon fuel and carbon dioxide. The hydrocarbon fuel includes a hydrocarbon, such as methane, propane, butane, other hydrocarbons with up to twelve carbon atoms, or a mixture of these. In some implementations, the hydrocarbon fuel includes liquid hydrocarbon that have been vaporized. In some implementations, the feed stream 101 has a carbon dioxide to hydrocarbon ratio in a range of from about 1:1 to about 4:1. In some implementations, the feed stream 101 has a carbon dioxide to hydrocarbon ratio in a range of from about 1:1 to about 2:1. For example, the feed stream 101 has a carbon dioxide to methane ratio in a range of from about 1:1 to about 4:1 or from about 1:1 to about 2:1. The feed stream 101 is free of oxygen gas ($O_2$).

The feed stream 101 flows to the preheater 103. The preheater 103 is configured to preheat the feed stream 101. In some implementations, the preheater 103 is configured to preheat the feed stream 101 to a temperature in a range of from about 700 degrees Celsius (°C) to about 950°C. In some implementations, the preheater 103 is configured to preheat the feed stream 101 to a temperature in a range of from about 700°C to about 850°C. In some implementations, the preheater 103 is configured to preheat the feed stream 101 to a temperature in a range of from about 750°C to about 950°C. Referring to Equation (1), the dry reforming reaction is endothermic. In some implementations, preheating the feed stream 101 to a temperature that is greater than 750°C can improve selectivity towards the generation of hydrogen and carbon monoxide (which are the preferred products) and away from forming other carbon-containing compounds. Preheating the feed stream 101 (for example, to a temperature greater than 750°C or greater than 800°C) can mitigate methane cracking both during the preheating process and in the dry operating mode (that is, without addition of steam) of the dry reforming process.

The preheated feed stream 104 exits the preheater 103 and flows to the reactor 105. In some implementations, the reactor 105 is a packed bed reactor. In some implementations, the reactor 105 is a fluidized bed reactor. Within the reactor, the methane reacts with the carbon dioxide to produce syngas 106 (carbon monoxide and hydrogen). In other words, the dry reforming reaction represented by Equation (1) occurs within the reactor 105.

The reactor 105 includes a catalyst. Flowing the preheated feed stream 104 to the reactor 105 brings the preheated feed stream 104 in contact with the catalyst. In the absence of oxygen, the catalyst speeds up and causes the dry reforming reaction within the reactor for a period of time sufficient to reform the hydrocarbon fuel (for example, methane) to produce the syngas 106. Because oxygen gas is not introduced to the reactor 105, combustion does not take place within the reactor 105. In some implementations, an operating pressure within the reactor 105 during the dry reforming reaction is in a range of from about 7 bar to about 28 bar. On one hand, as the dry reforming reaction forms a volume of products that is larger than the volume of reactants, so in some cases lower operating pressure within the reactor 105 may be preferred during the dry reforming reaction. On the other hand, a higher operating pressure allows for increased throughput of reactants being processed within the reactor 105, so in some cases higher operating pressure within the reactor 105 may be preferred during the dry reforming reaction. In some implementations, the operating pressure within the reactor 105 depends on the operating pressures of downstream operations (for example, syngas application or purification). For example, in applications using syngas to produce dimethyl ether (DME), the operating pressure of such applications tend to be higher, so the syngas produced from the reactor 105 can be compressed, and the operating pressure within the reactor 105 can be optimized for improved conversion at pressures greater than 10 bar. In some implementations, coking becomes more dominant at higher pressures, especially in cases where the dry reforming reaction is completely dry (that is, there is no addition of water in the form of steam), so in such conditions, an operating pressure within the reactor 105 during the dry reforming reaction is in a range of from about 10 bar to about 15 bar. The range of operating pressure can be expanded through the addition of water in the form of steam with the feed to the reactor 105. The operating pressure within the reactor 105 during the dry reforming reaction can be determined based on one or more of the aforementioned factors and economics of the process.

In some implementations, the catalyst within the reactor 105 is pre-treated. For example, the catalyst is preheated within the reactor 105, such that the catalyst is at a desired temperature before the feed stream 104 is flowed to the reactor 105. In some implementations, the inner volume of the reactor 105 is preheated, such that the operating temperature within the reactor 105 is at a desired temperature before the feed stream 104 is flowed to the reactor 105. In some implementations, the desired temperature of the catalyst, operating temperature within the reactor 105, or both are the same as or within a deviation of 10% from the temperature to which the feed stream 104 is preheated in the preheater 103.

The catalyst includes a rare earth group metal oxide, lanthanum oxide ($La_2O_3$), cerium oxide ($Ce_2O_3$), a mixture of both. The catalyst includes zirconium oxide ($ZrO_2$). The catalyst includes nickel (Ni), a reducible compound of Ni (for example, nickel oxide (NiO)), or a mixture of both. The catalyst includes platinum (Pt), Rh, a mixture of both. The platinum group metal can be included in pure elemental form or as a part of a chemical compound that includes the platinum group metal. The catalyst includes rhenium (Re). The Group VIIB metal can function as a promoter to enhance the efficiency of the dry reforming activity of the catalyst.

In some implementations, the catalyst includes about 0.5 weight percent (wt. %) to about 15 wt. % of Ni. In some implementations, the catalyst includes about 0.5 wt. % to about 10 wt. % of $Ce_2O_3$. In some implementations, the catalyst includes about 0.5 wt. % to about 5 wt. % of $La_2O_3$. In some implementations, the catalyst includes about 0.1 wt. % to about 2 wt. % of Pt. In some implementations, the catalyst includes up to about 1 wt. % $ZrO_2$. In some implementations, the catalyst includes up to about 2 wt. % Rh. In some implementations, the catalyst includes up to about 2 wt. % Re.

The catalyst is supported on an aluminate support. In such implementations, the aluminate support can be considered a portion of the catalyst. The aluminate support can include magnesium aluminate, calcium aluminate, or a mixture of both. In some implementations, an alkaline metal, such as potassium (K), is incorporated into the aluminate support. Including alkaline metal in the aluminate support can mitigate coke formation on the catalyst and can therefore mitigate catalyst deactivation. In implementations where the catalyst is supported on an aluminate support incorporated with K, the catalyst can include about 0.5 wt. % to about 5.0 wt. % of K.

In some implementations, catalyst includes a refractory support that includes alumina (for example, theta-alumina), magnesium aluminate, or a mixture of both. In some implementations, a refractory cement that is based on calcium aluminate is incorporated into the catalyst to improve the mechanical strength of the catalyst. In some implementations, the catalyst has a specific surface area in a range of from about 15 square meters per gram ($m^2$/g) to about 125 $m^2$/g.

The refractory support can be provided in different shapes, such as spheres, extrudates, or rings. For production of hydrogen-rich gas for use in fuel cells, it can be beneficial to use refractory supports in the form of spheres, for example, having diameters within a range of from about 1 millimeter to about 4 millimeters; complex extrudates, for example, trilobe, quadralobe, or raschig rings; or honeycomb structure. For large-scale production of hydrogen-rich gas (for example, greater than 100,000 normal cubic meters per day), it can be beneficial to use refractory supports in the form of rings with multiple holes.

In some implementations, the catalyst is prepared by a multiple step sequence of impregnation, calcination, and reduction of the components on the support. The catalyst impregnation can be carried out using an aqueous solution of a soluble salt, such as a nitrate salt. In some implementations, the rhodium and rhenium metal salts are impregnated after which they decompose upon subsequent heat treatment to form corresponding oxides. After impregnation, the composite material is dried (calcined) at a slow heating rate, for example, of about 0.5 °C increase per minute until reaching about 120 °C, and then the temperature is maintained at about 120 °C for about one hour. The temperature is then increased to about 250 °C at a slow heating rate, for example, of about 0.5 °C increase per minute, and then the temperature is maintained at about 250 °C for about 1.5 hours. The aforementioned heating (calcination) steps can be carried out in the presence of air or another oxygen containing gas. In some implementations, after impregnation and before heating, the catalyst can be treated at about 60 °C for about 10 to about 30 minutes with an ammonia containing gas. The catalyst can then be reduced with a hydrogen containing gas at a temperature in a range of from about 400 °C to about 450 °C for about 2 hours. The aforementioned impregnation, calcination, and reduction steps can be repeated with salts of Pt and Zr. The aforementioned impregnation, calcination, and reduction steps can be repeated with salts of Ni, Ce, and La. The reduction step for the salts of Ni, Ce, and La can be conducted at a temperature in a range of from about 400 °C to about 1,100°C, from about 600 °C to about 800°C, or from about 700 °C to about 750°C.

In some implementations, the catalyst is prepared by a single step sequence of impregnation, calcination, and reduction at a temperature in a range of from about 400 °C to about 1,100°C, from about 600 °C to about 800°C, or to about 700 °C to about 750°C. The refractory support can be impregnated with an aqueous solution of a soluble salt, such as a nitrate salt of Ni, Ce, La, and Pt. After impregnation, the composite material is dried (calcined) at a slow heating rate, for example, of about 0.5 °C increase per minute until reaching about 120 °C, and then the temperature is maintained at about 120 °C for about one hour. The temperature is then increased to about 250 °C at a slow heating rate, for example, of about 0.5 °C increase per minute, and then the temperature is maintained at about 250 °C for about 1.5 hours. The temperature is then increased to about 400 °C to about 450 °C. The aforementioned heating (calcination) steps can be carried out in the presence of air or another oxygen containing gas. The catalyst can then be reduced with a hydrogen containing gas at a temperature in a range of from about 400 °C to about 1,100 °C, from about 600 °C to about 800°C, or from about 700 °C to about 750°C. In some implementations, depending on the volume of pores in the support, the impregnation, drying, and calcination can be repeated one or more times to obtain desired contents of each component in the catalyst.

In some implementations, the feed stream 101 also includes water ($H_2O$) in the form of steam. In some implementations, the feed stream 101 has a water to carbon (that is, carbon atoms from any carbon-containing species, such as the carbon dioxide and the hydrocarbon fuel) ratio in a range of from about 1:10 to about 3:1. In some implementations, the feed stream 101 has a water to carbon ratio in a range of from about 1:10 to about 1:1. Including steam in the feed stream 101 can reduce the severity of the carbon-carbon reaction at the operating conditions of the dry reforming reaction within the reactor 105. Including steam in the feed stream 101 can mitigate coke formation on the catalyst and can therefore mitigate catalyst deactivation. Including steam in the feed stream 101 can increase the hydrogen to carbon monoxide ratio in the syngas 106 that is produced by the reactor 105. Including steam in the feed stream 101 can improve selectivity of the catalyst in producing syngas 106 as opposed to other carbon-containing compounds.

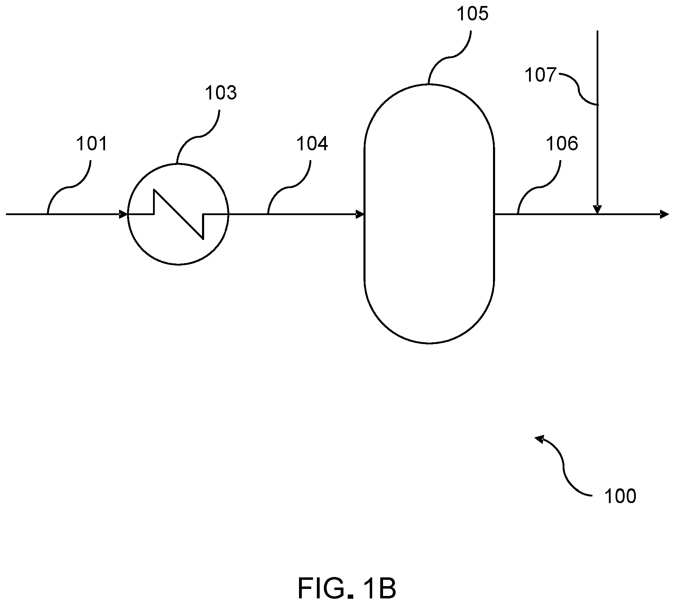

FIG. 1B illustrates an implementation of the system 100 that is substantially similar to the system 100 shown in FIG. 1A. In some implementations, as shown in FIG. 1B, the system 100 includes an additional hydrogen stream 107 that can be mixed with the syngas 106 exiting the reactor 105. The additional hydrogen stream 107 can be sourced, for example, from electrolysis of water using renewable energy, allowing for the chemicals/fuels produced from the syngas 106 to have a decreased carbon footprint. The addition of hydrogen to the syngas 106 can increase the hydrogen to carbon monoxide ratio for tailoring to downstream processes. For example, some processes that may favor an increased hydrogen to carbon monoxide ratio in the syngas 106 include methanol production, ethanol production, and acetic acid production.

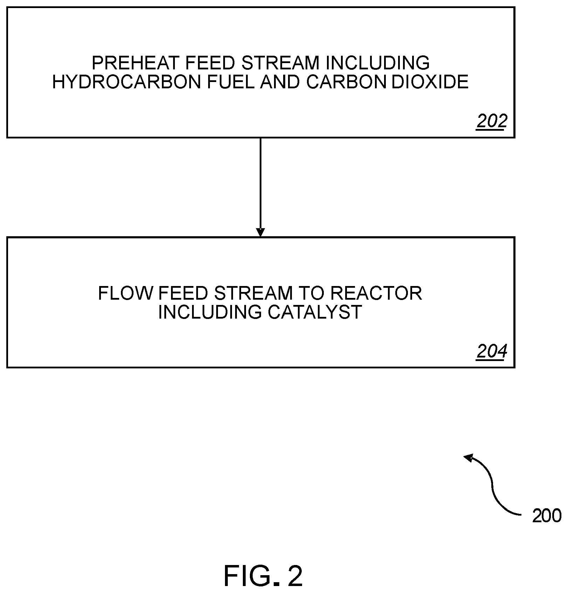

FIG. 2 is a flow chart of an example dry reforming process 200 for producing a syngas from a hydrocarbon fuel. The system 100 can implement the dry reforming process 200. At step 202, a feed stream including hydrocarbon fuel and carbon dioxide (such as the feed stream 101) is preheated. For example, the preheater 103 preheats the feed stream 101 at step 202. In some implementations, the feed stream 101 is preheated to a temperature in a range of from about 750°C to about 950°C at step 202. As mentioned previously, the feed stream 101 can also include water in the form of steam. In some implementations, the dry reforming process 200 includes mixing the hydrocarbon fuel (for example, methane) with the carbon dioxide to form the feed stream 101 before step 202. In some implementations, the dry reforming process 200 includes mixing the hydrocarbon fuel (for example, methane) with the carbon dioxide and water to form the feed stream 101 before step 202.

At step 204, the preheated feed stream (such as the preheated feed stream 104) is flowed to a reactor including a catalyst (such as the reactor 105). The catalyst can be the catalyst that was described previously. Flowing the preheated feed stream 104 to the reactor 105 at step 204 brings the preheated feed stream 104 into contact with the catalyst. In the absence of oxygen, the catalyst causes a dry reforming reaction (for example, the reaction represented by Equation (1)) within the reactor 105 for a period of time sufficient to reform the hydrocarbon fuel to produce the syngas (such as the syngas 106). In some implementations, the feed stream is brought into contact with the catalyst in the absence of oxygen at a gas hourly space velocity in a range of from about 1,000 $h^{-1}$ to about 3,000 $h^{-1}$ at step 204. In some implementations, an operating pressure within the reactor during the dry reforming reaction at step 204 is in a range of from about 7 bar to about 28 bar.

The syngas 106 can be discharged from the reactor 105. In some implementations, additional hydrogen can be mixed with the syngas 106 discharged from the reactor 105 to increase the hydrogen to carbon monoxide ratio. For example, the hydrogen stream 107 can be mixed with the syngas 106.

EXAMPLES

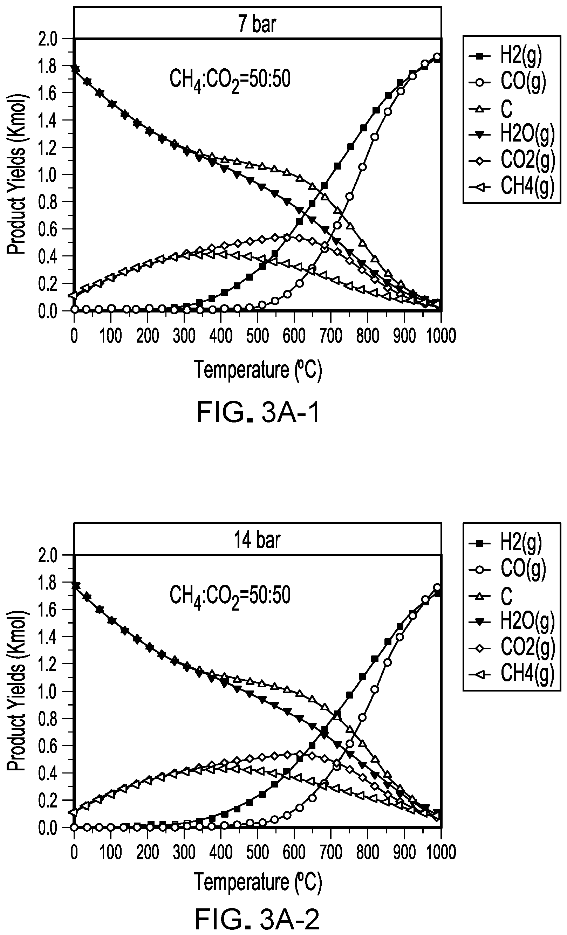

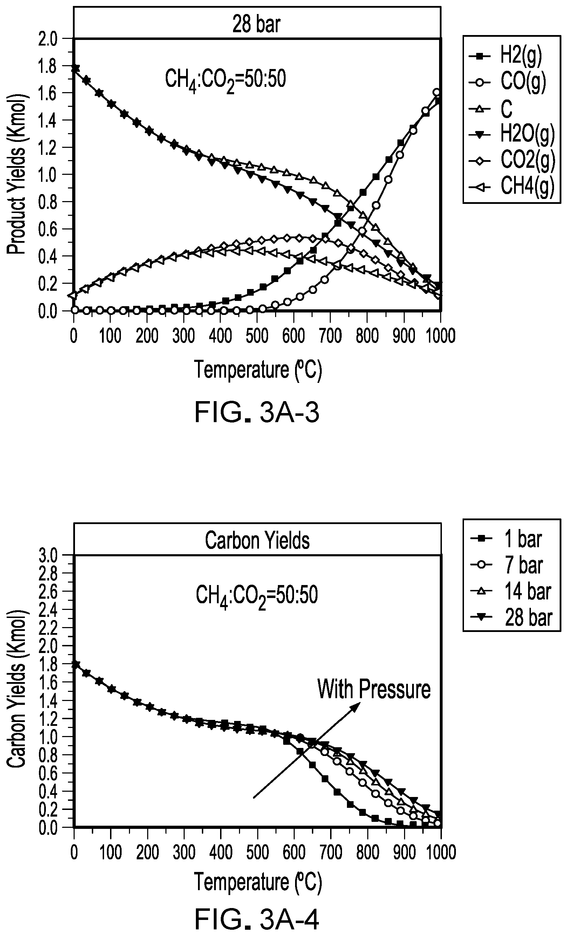

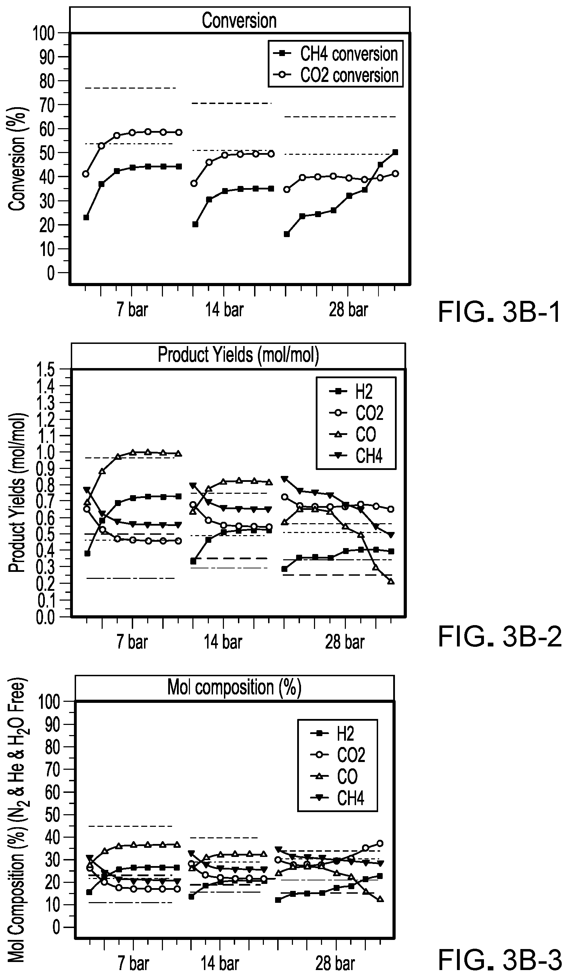

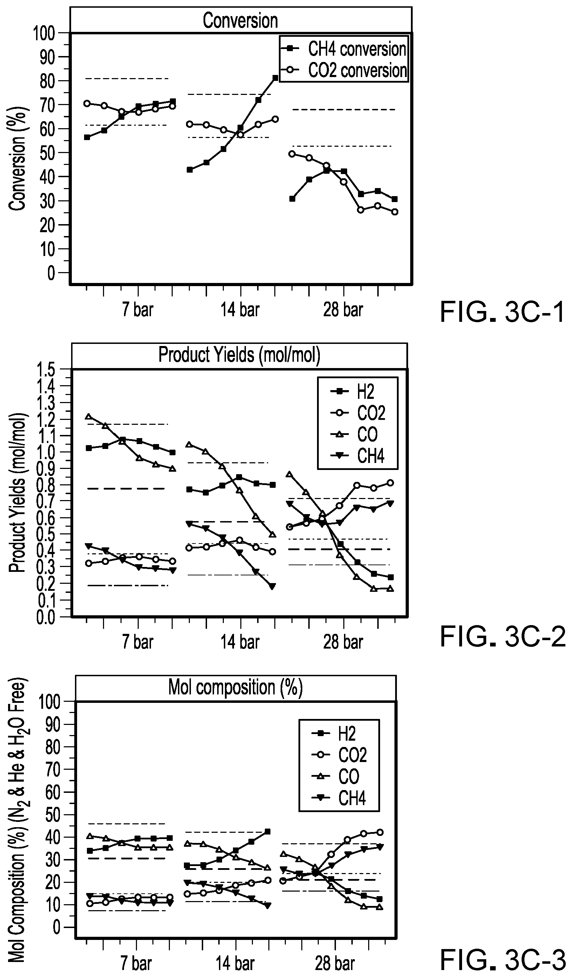

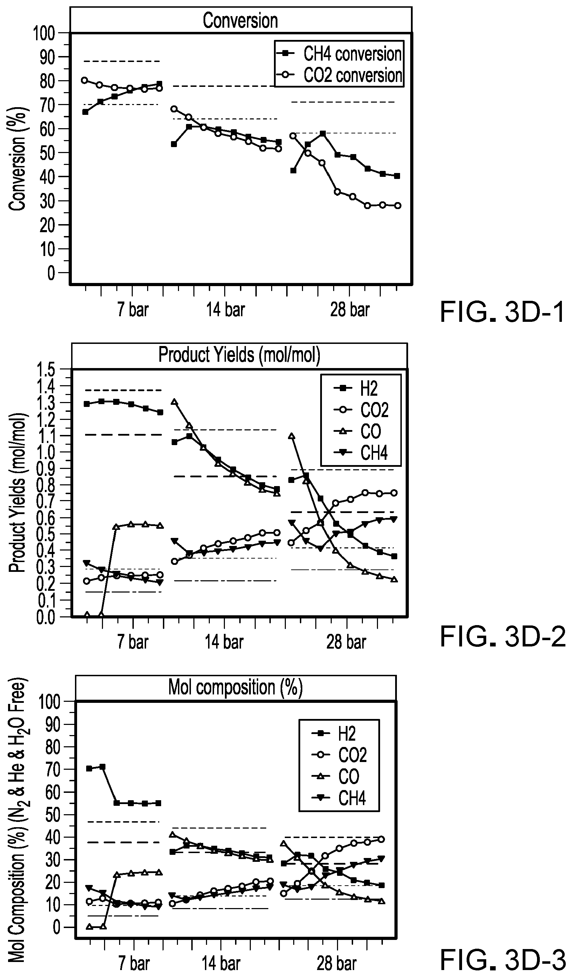

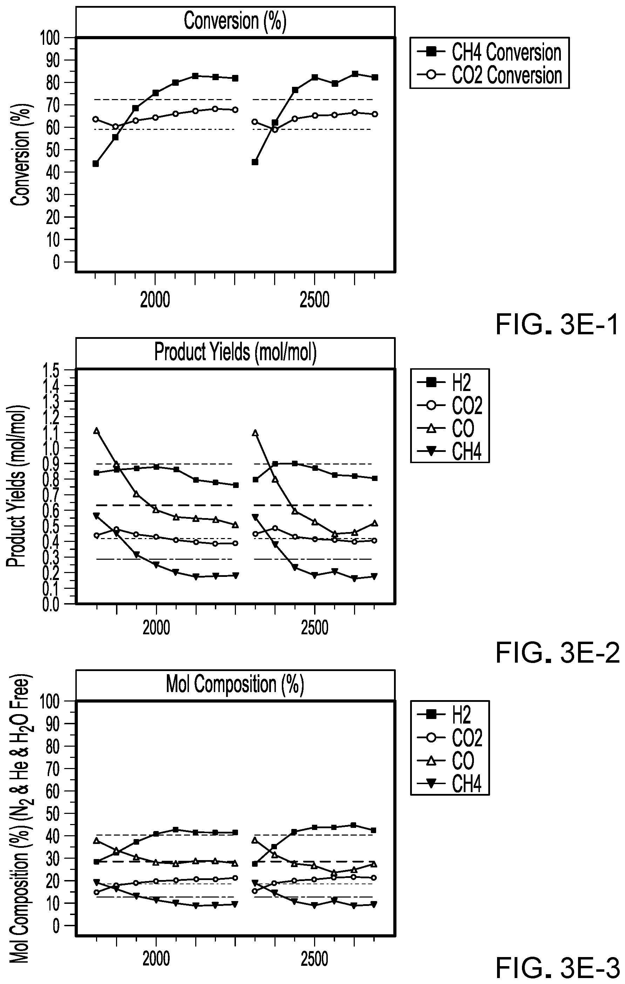

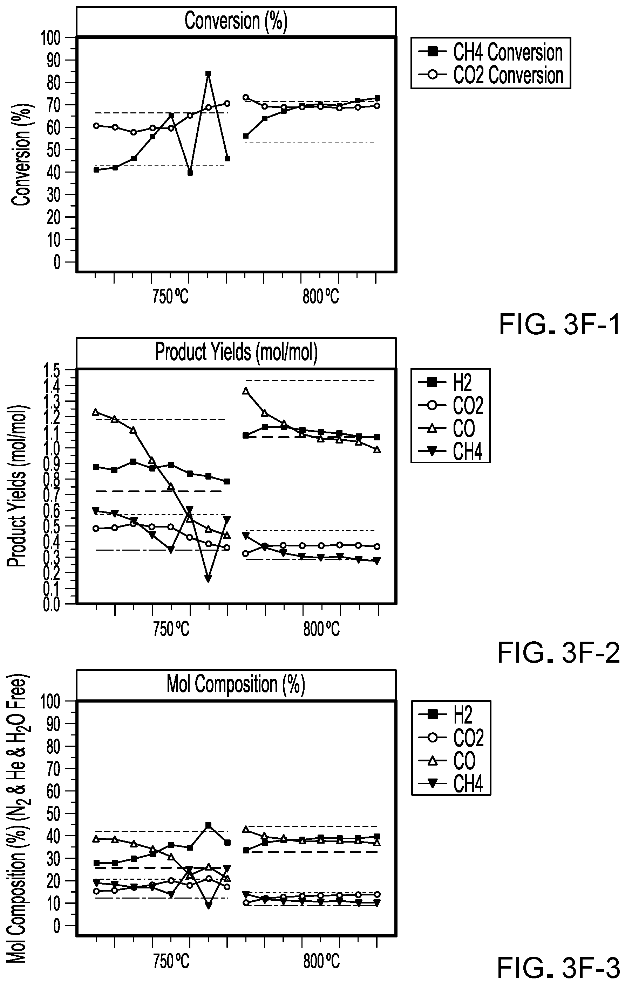

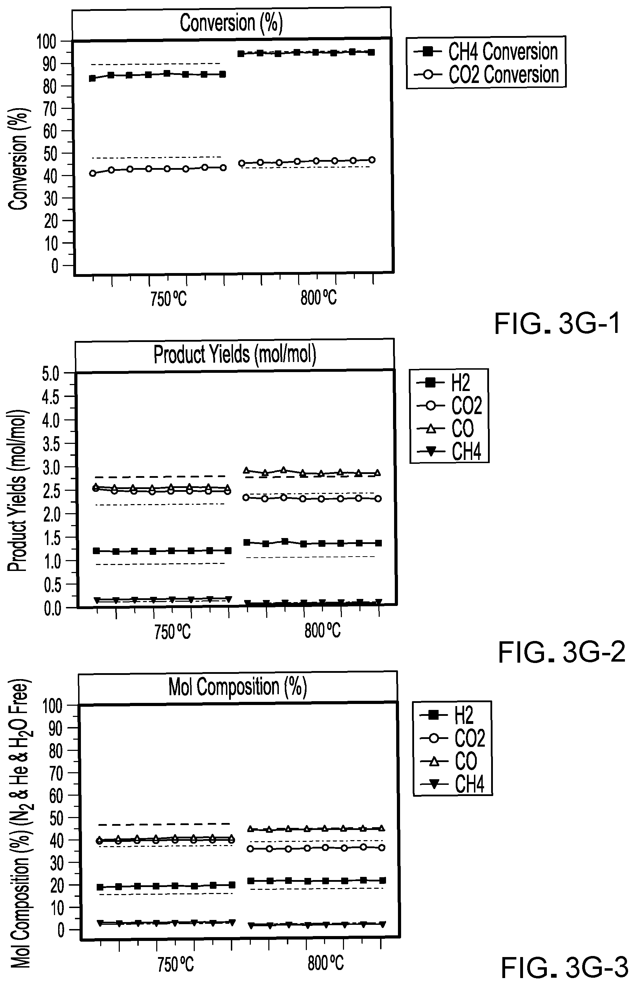

FIGs. 3A-1, 3A-2, and 3A-3, provide various plots that illustrate the thermodynamic equilibrium product compositions of the dry reforming process over a range of operating temperatures at various operating pressures. FIGs. 3A-1, 3A-2, and 3A-3, demonstrate that selectivity of syngas (hydrogen and carbon monoxide) generally increases with increasing operating temperature. FIG. 3A-4 is a plot that illustrates the effect of operating pressure on carbon yields (coking) of the dry reforming process. FIG. 3A-4 demonstrates that coke formation generally increases with increasing operating pressure and generally decreases with increasing operating temperature. In all examples shown in FIGs. 3A-1, 3A-2, 3A-3, and 3A-4, the $CH_4$:$CO_2$ in the feed stream was 1:1.

FIGs. 3B-1, 3B-2, and 3B-3 provide various plots that illustrate the effect of operating pressure (7 bar, 14 bar, and 28 bar, respectively) on hydrocarbon conversion rate, product yield, and feed/product compositions of the dry reforming process at an operating temperature of 700°C. The horizontal dotted lines in FIGs. 3B-1, 3B-2, and 3B-3 represent expected conversions, product yields, and product compositions, respectively. The connected data points in FIGs. 3B-1, 3B-2, and 3B-3 demonstrate the catalyst performances with a feed stream including a $CH_4$:$CO_2$ ratio of 1:1 at 700°C and the various operating pressures.

FIGs. 3C-1, 3C-2, and 3C-3 provide various plots that illustrate the effect of operating pressure (7 bar, 14 bar, and 28 bar, respectively) on hydrocarbon conversion rate, product yield, and feed/product compositions of the dry reforming process at an operating temperature of 750°C. The horizontal dotted lines in FIGs. 3C-1, 3C-2, and 3C-3 represent expected conversions, product yields, and product compositions, respectively. The connected data points in FIGs. 3C-1, 3C-2, and 3C-3 demonstrate the catalyst performances with a feed stream including a $CH_4$:$CO_2$ ratio of 1:1 at 750°C and the various operating pressures.

FIGs. 3D-1, 3D-2, and 3D-3 provide various plots that illustrate the effect of operating pressure (7 bar, 14 bar, and 28 bar, respectively) on hydrocarbon conversion rate, product yield, and feed/product compositions of the dry reforming process at an operating temperature of 800°C. The horizontal dotted lines in FIGs. 3D-1, 3D-2, and 3D-3 represent expected conversions, product yields, and product compositions, respectively. The connected data points in FIGs. 3D-1, 3D-2, and 3D-3 demonstrate the catalyst performances with a feed stream including a $CH_4$:$CO_2$ ratio of 1:1 at 800°C and the various operating pressures.

For each of the experimental runs whose results are shown in the plots of FIGs. 3B-1, 3B-2, 3B-3, 3C-1, 3C-2, 3C-3, 3D-1, 3D-2, and 3D-3: the gas hourly space velocity was 1,500 $h^{-1}$; the molar compositional ratio of $CH_4$:$CO_2$:$N_2$:He in the feed stream was 31:31:30:8; the catalyst was pre-treated to 700°C for three hours; and total reaction runtime was 24 hours. These experimental runs demonstrate effective performance of the catalyst at high temperatures (for example, 800°C or greater) at an operating pressure in a range of from about 10 bar to about 15 bar.

FIGs. 3E-1, 3E-2, and 3E-3 provide various plots that illustrate the effect of gas hourly space velocity (2,000 $h^{-1}$ and 2,500 $h^{-1}$) on hydrocarbon conversion rate, product yield, and feed/product compositions, respectively, of the dry reforming process at an operating temperature of 800°C and an operating pressure of 28 bar. For each of the experimental runs whose results are shown in the plots of FIGs. 3E-1, 3E-2, and 3E-3: the molar compositional ratio of $CH_4$:$CO_2$:$N_2$:He in the feed stream was 31:31:30:8; the catalyst was pre-treated to 800°C for six hours; and total reaction runtime was 24 hours. Greater gas hourly space velocities tend to have less single pass conversion and typically means that more recycle occurs in the process. FIGs. 3E-1, 3E-2, and 3E-3 demonstrate that the catalyst exhibits stable performance in reaching equilibrium compositions over a range of gas hourly space velocities at the operating temperature of 800°C and the operating pressure of 28 bar.

FIGs. 3F-1, 3F-2, and 3F-3 provide various plots that illustrate the effect of operating temperature (750°C and 800°C) on hydrocarbon conversion rate, product yield, and feed/product compositions, respectively, of the dry reforming process at an operating pressure of 14 bar when the feed stream includes water ($CH_4$:$CO_2$:$H_2O$ ≈ 2:2:1). For each of the experimental runs whose results are shown in the plots of FIGs. 3F-1, 3F-2, and 3F-3: the molar compositional ratio of $CH_4$:$CO_2$:$H_2O$:$N_2$:He in the feed stream was 26:26:16:26:6; the catalyst was pre-treated to 800°C for six hours; and total reaction runtime was 24 hours. FIGs. 3F-1, 3F-2, and 3F-3 demonstrate the impact of adding steam in the feed stream. Adding steam can increase the $H_2$:CO ratio in the product at milder operating conditions (for example, at cooler temperatures), which can improve catalyst operating life. Further, increased $H_2$:CO ratios in the product can be favorable for various downstream processes (mentioned previously).

FIGs. 3G-1, 3G-2, and 3G-3 provide various plots that illustrate the effect of operating temperature (750°C and 800°C) on hydrocarbon conversion rate, product yield, and feed/product compositions, respectively, of the dry reforming process at an operating pressure of 14 bar when the feed stream has a decreased $CH_4$:$CO_2$ ratio (1:3). For each of the experimental runs whose results are shown in the plots of FIGs. 3G-1, 3G-2, and 3G-3: the molar compositional ratio of $CH_4$:$CO_2$:$N_2$:He in the feed stream was 16:48:32:4; the catalyst was pre-treated to 800°C for six hours; and total reaction runtime was 24 hours. FIGs. 3G-1, 3G-2, and 3G-3 demonstrate the impact of adjusting the $CH_4$:$CO_2$ ratio in the feed stream at dry operating conditions (no addition of steam) at the various operating temperatures. The stability of these results may demonstrate favorable conditions in mitigating coking. With increased $CO_2$ content in the feed stream, coke deposits that form during the reaction can potentially be further reacted with $CO_2$ to form additional CO (for example, via the reverse Boudouard reaction). Decreasing the $CH_4$:$CO_2$ ratio in the feed stream may result in decreased $H_2$:CO ratios in the product syngas, but the $H_2$:CO ratio in the syngas can be adjusted (see, for example, FIG. 1B).

Although some of the aforementioned examples included inert gas (for example, nitrogen ($N_2$), helium (He), or both) in the feed stream, the inert gas was included in order to verify quality of the experiments through mass balance checks, and the inert gas is not necessarily included in industrial applications of the dry reforming processes described here.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any suitable sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, it is to be understood that the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also to include all the individual numerical values or sub-ranges encompassed within that range as if each numerical value and sub-range is explicitly recited. For example, a range of "0.1% to about 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. In certain circumstances, multitasking or parallel processing (or a combination of multitasking and parallel processing) may be advantageous and performed as deemed appropriate.

Moreover, the separation or integration of various system modules and components in the previously described implementations should not be understood as requiring such separation or integration in all implementations, and it should be understood that the described components and systems can generally be integrated together or packaged into multiple products.

**Claims**

1. A dry reforming process (200) for producing a synthesis gas from a hydrocarbon fuel, comprising:

   preheating (202) a feed stream comprising the hydrocarbon fuel and carbon dioxide; and
   flowing (204) the preheated feed stream to a reactor comprising a catalyst, thereby bringing the preheated feed stream into contact with the catalyst in the absence of oxygen and causing a dry reforming reaction within the reactor for a period of time sufficient to reform the hydrocarbon fuel to produce the synthesis gas, the catalyst comprising nickel (Ni), lanthanum oxide ($La_2O_3$), cerium oxide ($Ce_2O_3$), platinum (Pt), zirconium oxide ($ZrO_2$), rhodium (Rh), rhenium (Re), and an aluminate support.

2. The dry reforming process of claim 1, wherein the feed stream is preheated to a temperature in a range of from 750 degrees Celsius (°C) to 950°C.

3. The dry reforming process of claim 1 or 2, wherein an operating pressure within the reactor during the dry reforming reaction is in a range of from 7 bar to 28 bar.

4. The dry reforming process of any preceding claim, wherein the feed stream has a carbon dioxide to hydrocarbon ratio in a range of from 1:1 to 4:1.

5. The dry reforming process of claim 4, wherein the carbon dioxide to hydrocarbon ratio of the feed stream is in a range of from 1:1 to 2:1.

6. The dry reforming process of any preceding claim, wherein the feed stream comprises water.

7. The dry reforming process of claim 6, wherein the feed stream has a water to carbon ratio in a range of from 1:10 to 3:1.

8. The dry reforming process of claim 7, wherein the water to carbon ratio of the feed stream is in a range of from 1:10 to 1:1.

9. The dry reforming process of any preceding claim, wherein the catalyst comprises:

>     0.5 weight percent (wt. %) to 15 wt. % of Ni;
>     about 0.5 wt. % to 10 wt. % of $Ce_2O_3$;
>     0.5 wt. % to 5 wt. % of $La_2O_3$;
>     0.1 wt. % to 2 wt. % of Pt;
>     up to 1 wt. % of $ZrO_2$;
>     up to 2 wt. % of Rh; and
>     up to 2 wt. % of Re.

10. The dry reforming process of claim 9, wherein potassium (K) is incorporated into the aluminate support.

11. The dry reforming process of claim 10, wherein the catalyst comprises 0.5 wt. % to 5.0 wt. % of K.

**Patentansprüche**

1. Trockenreformierungsverfahren (200) zum Erzeugen eines Synthesegases aus einem Kohlenwasserstoffbrennstoff, umfassend:

>     Vorwärmen (202) eines Einsatzstroms, der den Kohlenwasserstoffbrennstoff und Kohlendioxid umfasst; und Einleiten (204) des vorgewärmten Einsatzstroms in einen Reaktor, der einen Katalysator umfasst, wodurch der vorgewärmte Einsatzstrom in Abwesenheit von Sauerstoff mit dem Katalysator in Kontakt gebracht wird und eine Trockenreformierungsreaktion in dem Reaktor über einen Zeitraum bewirkt wird, der ausreicht, um den Kohlenwasserstoffbrennstoff unter Erzeugung von Synthesegas zu reformieren, wobei der Katalysator Nickel (Ni), Lanthanoxid ($La_2O_3$), Ceroxid ($Ce_2O_3$), Platin (Pt), Zirconiumoxid ($ZrO_2$), Rhodium (Rh), Rhenium (Re) und einen Aluminatträger umfasst.

2. Trockenreformierungsverfahren nach Anspruch 1, wobei der Einsatzstrom auf eine Temperatur in einem Bereich von 750 Grad Celsius (°C) bis 950 °C vorgewärmt wird.

3. Trockenreformierungsverfahren nach Anspruch 1 oder 2, wobei ein Betriebsdruck in dem Reaktor während der Trockenreformierungsreaktion in einem Bereich von 7 bar bis 28 bar liegt.

4. Trockenreformierungsverfahren nach einem der vorhergehenden Ansprüche, wobei der Einsatzstrom ein Verhältnis von Kohlendioxid zu Kohlenwasserstoff in einem Bereich von 1:1 bis 4:1 aufweist.

**5.** Trockenreformierungsverfahren nach Anspruch 4, wobei das Verhältnis von Kohlendioxid zu Kohlenwasserstoff des Einsatzstroms in einem Bereich von 1:1 bis 2:1 liegt.

**6.** Trockenreformierungsverfahren nach einem der vorhergehenden Ansprüche, wobei der Einsatzstrom Wasser umfasst.

**7.** Trockenreformierungsverfahren nach Anspruch 6, wobei der Einsatzstrom ein Verhältnis von Wasser zu Kohlenstoff in einem Bereich von 1:10 bis 3:1 aufweist.

**8.** Trockenreformierungsverfahren nach Anspruch 7, wobei das Verhältnis von Wasser zu Kohlenstoff des Einsatzstroms in einem Bereich von 1:10 bis 1:1 liegt.

**9.** Trockenreformierungsverfahren nach einem der vorhergehenden Ansprüche, wobei der Katalysator Folgendes umfasst:

> 0,5 Gewichtsprozent (Gew.-%) bis 15 Gew.-% Ni;
> etwa 0,5 Gew.-% bis 10 Gew.-% $Ce_2O_3$;
> 0,5 Gew.-% bis 5 Gew.-% $La_2O_3$;
> 0,1 Gew.-% bis 2 Gew.-% Pt;
> bis zu 1 Gew.-% $ZrO_2$;
> bis zu 2 Gew.-% Rh und
> bis zu 2 Gew.-% Re.

**10.** Trockenreformierungsverfahren nach Anspruch 9, wobei Kalium (K) in den Aluminatträger eingebaut ist.

**11.** Trockenreformierungsverfahren nach Anspruch 10, wobei der Katalysator 0,5 Gew.-% bis 5,0 Gew.-% K umfasst.

**Revendications**

**1.** Procédé de reformage à sec (200) pour produire un gaz de synthèse à partir d'un combustible hydrocarboné, comprenant :

> le préchauffage (202) d'un flux d'alimentation comprenant le combustible hydrocarboné et le dioxyde de carbone ; et
> l'écoulement (204) du flux d'alimentation préchauffé vers un réacteur comprenant un catalyseur, mettant ainsi en contact le flux d'alimentation préchauffé avec le catalyseur en l'absence d'oxygène et causant une réaction de reformage à sec dans le réacteur pendant une durée suffisante pour reformer le combustible hydrocarboné pour produire le gaz de synthèse, le catalyseur comprenant du nickel (Ni), de l'oxyde de lanthane ($La_2O_3$), de l'oxyde de cérium ($Ce_2O_3$), du platine (Pt), de l'oxyde de zirconium ($ZrO_2$), du rhodium (Rh), du rhénium (Re), et un support d'aluminate.

**2.** Procédé de reformage à sec selon la revendication 1, dans lequel le flux d'alimentation est préchauffé jusqu'à une température dans une plage de 750 degrés Celsius (°C) à 950 °C.

**3.** Procédé de reformage à sec selon la revendication 1 ou 2, dans lequel une pression de fonctionnement à l'intérieur du réacteur pendant la réaction de reformage à sec est dans une plage de 7 bars à 28 bars.

**4.** Procédé de reformage à sec selon l'une quelconque des revendications précédentes, dans lequel le flux d'alimentation a un rapport dioxyde de carbone sur hydrocarbure dans une plage de 1:1 à 4:1.

**5.** Procédé de reformage à sec selon la revendication 4, dans lequel le rapport dioxyde de carbone sur hydrocarbure du flux d'alimentation est dans une plage de 1:1 à 2:1.

**6.** Procédé de reformage à sec selon l'une quelconque des revendications précédentes, dans lequel le flux d'alimentation comprend de l'eau.

**7.** Procédé de reformage à sec selon la revendication 6, dans lequel le flux d'alimentation a un rapport d'eau sur carbone dans une plage de 1:10 à 3:1.

8. Procédé de reformage à sec selon la revendication 7, dans lequel le rapport d'eau sur carbone du flux d'alimentation est dans une plage de 1:10 à 1:1.

9. Procédé de reformage à sec selon l'une quelconque des revendications précédentes, dans lequel le catalyseur comprend :

  0,5 pour cent en poids (% en poids) à 15 % en poids de Ni ;
  environ 0,5 % en poids à 10 % en poids de $Ce_2O_3$ ;
  0,5 % en poids à 5 % en poids de $La_2O_3$ ;
  0,1 % en poids à 2 % en poids de Pt ;
  jusqu'à 1 % en poids de $ZrO_2$ ;
  jusqu'à 2 % en poids de Rh ; et
  jusqu'à 2 % en poids de Re.

10. Procédé de reformage à sec selon la revendication 9, dans lequel du potassium (K) est incorporé dans le support d'aluminate.

11. Procédé de reformage à sec selon la revendication 10, dans lequel le catalyseur comprend 0,5 % en poids à 5,0 % en poids de K.

101   103   104   105   106

100

FIG. 1A

FIG. 1B

PREHEAT FEED STREAM INCLUDING
HYDROCARBON FUEL AND CARBON DIOXIDE

*202*

FLOW FEED STREAM TO REACTOR
INCLUDING CATALYST

*204*

200

FIG. 2

FIG. 3A-1

FIG. 3A-2

FIG. 3A-3

FIG. 3A-4

FIG. 3B-1

FIG. 3B-2

FIG. 3B-3

FIG. 3C-1

FIG. 3C-2

FIG. 3C-3

FIG. 3D-1

FIG. 3D-2

FIG. 3D-3

FIG. 3E-1

FIG. 3E-2

FIG. 3E-3

FIG. 3F-1

FIG. 3F-2

FIG. 3F-3

FIG. 3G-1

FIG. 3G-2

FIG. 3G-3

**EP 4 178 909 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2104657 A

- US 2017001176 A